# EUROPÄISCHE PATENTSCHRIFT

(11) **EP 0 422 443 B1**
(45) Veröffentlichungstag und Bekanntmachung des Hinweises auf die Patenterteilung: **14.06.1995**
(21) Anmeldenummer: 90118382.2
(22) Anmeldetag: 25.09.1990
(51) Int. Cl.: H04J 3/16, H04J 3/07

(54) **Multiplexer und Demultiplexer, insbesondere für Nachrichtenübertragungs-Netze mit einer synchronen Hierarchie der Digitalsignale**
Multiplexer and demultiplexer, especially for information transmission networks with a synchronous hierarchy of digital signals
Multiplexeur et démultiplexeur, notamment pour réseaux de transmission d'informations sur une hiérarchie synchrone de signaux numériques

(30) Priorität: 13.10.1989 DE 3934248
(43) Veröffentlichungstag der Anmeldung: 17.04.1991
(73) Patentinhaber: Alcatel SEL Aktiengesellschaft, D-70435 Stuttgart (DE); ALCATEL N.V., NL-1077 XX Amsterdam (NL)
(72) Erfinder: Wettengel, Heinz, D-7257 Ditzingen (DE)
(74) Vertreter: Kugler, Hermann, Dipl.-Phys.

(56) Entgegenhaltungen:
- EP-A- 0 248 551
- DE-A- 2 301 431
- FREQUENZ. Bd. 32, Nr. 10, Oktober 1978, BERLIN DE Seiten 281-287; F. Kühne et al.: "Positiv-Null-Negativ-Stopftechnik für die Multiplexübertragung plesiosynchroner Datensignale"

## Beschreibung

Die Erfindung betrifft einen Multiplexer und einen Demultiplexer für Anwendungsfälle, wie sie zum Beispiel durch die für ein synchrones digitales Nachrichtenübertragungs-Netz bestehenden Vorschriften gegeben sind.

In den CCITT-Empfehlungen G.707, G.708 und G.709 ist eine synchrone Hierarchie der Digitalsignale festgelegt. Dabei sind bestimmte Multiplexsignale, auch Multiplexelemente genannt, hinsichtlich Bitfolgefrequenz und Aufbau des Pulsrahmens genau festgelegt, z.B. sogenannte "virtuelle Container". Soll ein Digitalsignal der plesiochronen Hierarchie, z.B. ein Multiplexsignal mit 139 264 kbit/s der vierten Stufe der europäischen Hierarchie oder z.B. ein mit derselben Bitfolgefrequenz codiertes digitales Fernsehsignal in einem Übertragungsnetz mit der synchronen Hierarchie Übertragen werden, so ist dafür vorgesehen, daß dieses Signal in das ihm entsprechende Multiplexsignal, den sogenannten "virtuellen Container", eingefügt wird. Das Einfügen heißt in den genannten CCITT-Empfehlungen: "mapping". Es besteht aus dem Hinzufügen zusätzlicher Wörter, "Bytes" genannt, zur Anpassung an die Bitfolgefrequenz oder Übertragungskapazität des jeweiligen Multiplexsignals und aus dem bitweisen Stopfen zur Frequenzanpassung.

Beschrieben ist die neue Hierarchie und die dazugehörigen Vorschriften über das Einfügen von Signalen aus anderen Hierarchien in ntz Bd. 41 (1988) Heft 10, S. 570 bis S. 574 und in PKI TECH. MITT. 1/1989, S. 7 bis S. 16. In der erstgenannten Schrift ist in Bild 4, das der Fig. 5.3 der CCITT-Empfehlung G.709 entspricht, eine Vorschrift zum Einfügen eines Nutzsignals mit einer Bitfolgefrequenz von 139 264 kbit/s in einen "virtuellen Container" VC-4 wiedergegeben. Aus dieser Vorschrift und aus entsprechenden Vorschriften zum Einfügen anderer Digitalsignale in entsprechende "virtuelle Container" stellt sich die Aufgabe, eine Schaltungsanordnung zu schaffen, die dazu dient, aus einem Digitalsignal und aus der hinzuzufügenden Zusatzinformation ein Multiplexsignal mit dem vorgeschriebenen Pulsrahmen zu erzeugen und auch eine Schaltungsanordnung zu schaffen, die empfangsseitig ein solches Multiplexsignal wieder auflöst und daraus das ursprüngliche Digitalsignal zurückgewinnt.

Solche Schaltungsanordnungen können im weiteren Sinne als Multiplexer bzw. Demultiplexer bezeichnet werden, da sie ein digitales Zeitmultiplexsignal mit einem bestimmten Pulsrahmen erzeugen bzw. auflösen. Von Multiplexern und Demultiplexern im engeren Sinne, z.B. gemäß den Definitionen 3011 und 3012 in der CCITT-Empfehlung G.702, unterscheiden sie sich dadurch, daß das von ihnen zusammengesetzte bzw. aufgelöste Zeitmultiplexsignal nicht aus zwei oder mehreren Digitalsignalen zusammengesetzt ist, sondern im wesentlichen aus einem einzigen Digitalsignal besteht, in das Zusatzinformationen und Stopfbits eingefügt sind.

Aus der obengenannten Vorschrift für den Pulsrahmen des Multiplexsignals, z.B. eines mit dem "virtuellen Container" VC-4, ergeben sich folgende Probleme, die bei der Schaffung eines für diesen Pulsrahmen geeigneten Multiplexers und Demultiplexers zu lösen sind:
1. Es ist eine relativ hohe Bitfolgefrequenz von 139 264 kbit/s zu verarbeiten. Eine bitweise Verarbeitung würde daher eine Technologie erfordern, die den Nachteil eines hohen, meistens sogar untragbaren, Leistungsverbrauchs hätte.
2. Der Pulsrahmen des Zeitmultiplexsignals ist wortweise strukturiert, indem er aus aufeinanderfolgenden 8-Bit-Wörtern besteht. (In der oben genannten Veröffentlichung ntz ist diese Eigenschaft als "byteorientierter Rahmenaufbau" bezeichnet.) Hieraus würde sich eine wortweise Verarbeitung mit dem Vorteil der um den Faktor 8 herabgesetzten Verarbeitungsfrequenz anbieten. Andererseits ist aber auch vorgeschrieben, daß an einer bestimmten Wortposition Z bitweise gestopft wird, indem mindestens das letzte Bit R des Z-Worts gestopft werden muß und das vorletzte Bit bedarfsweise ein Stopfbit ist oder nicht.

Hieraus ergibt sich die Aufgabe der Erfindung, einen Multiplexer und einen Demultiplexer zu schaffen, der entsprechend der Wortstruktur des Zeitmultiplexsignals wortweise arbeitet und trotzdem in der Lage ist, bitweise zu stopfen bzw. bitweise im Pulsrahmen enthaltene Stopfbits zu eliminieren.

Es ist darauf hinzuweisen, daß eine solche Aufgabe sich bei bekannten Multiplexern und Demultiplexern noch nicht gestellt hat. Diese arbeiten entweder bitweise und stopfen auch bitweise, wie z.B. der aus Frequenz 32 (1978) 10, S. 281 bis 287 bekannte Multiplexer, oder sie arbeiten wortweise und stopfen überhaupt nicht oder auch wortweise.

Die Aufgabe wird bezüglich des Multiplexers wie in Patentanspruch 1 angegeben gelöst und bezüglich des Demultiplexers wie im Patentanspruch 2 angegeben.

Bevor die Erfindung im einzelnen erläutert wird, werden im folgenden für das Verständnis der Lösung, wie sie in den Ansprüchen 1 und 2 angegeben ist, einige wichtige Erläuterungen gegeben und Vorteile genannt.

Im ersten Merkmal des Patentanspruchs 1 besagt die Angabe "Digitalsignal und digitale Zusatzinformationen", daß es sich, wie oben erläutert, nicht um einen Multiplexer im engeren Sinne handelt. Das zweite Merkmal beschreibt den neuen Multiplexer durch die wesentlichen Eigenschaften des Pulsrahmens des von ihm gebildeten Zeitmultiplexsignals. Diese Eigenschaften sind:
- Der Pulsrahmen ist wortweise strukturiert, indem er aus aufeinanderfolgenden n-Bit-Wörtern besteht. Für den obigen Anwendungsfall eines Pulsrahmens nach Fig. 5.3 der CCITT-Empfehlung G.709 ist n = 8, kann im allgemeinen jedoch auch einen anderen Wert haben.
- An mindestens einer Wortposition enthält er ein Wort, Stopfwort genannt, das mindestens an seiner letzten Bitposition Stopfbits mit undefiniertem Zustand und ansonsten Bits des Digitalsignals enthält. Im Anwendungsfall des Pulsrahmens nach Fig.5.3/G.709 ist ein solches Wort, das mit Z bezeichnete 8-Bit-Wort, das an seiner letzten Bitposition ein Stopfbit R, an seiner vorletzten Bitposition nur im Bedarfsfalle ein Stopfbit S und ansonsten Bits I des Digitalsignals enthält. Ein solches ist aber auch jedes der in dem Pulsrahmen enthaltenen y-Wörter, die keine Bits des Digitalsignals, sondern nur Stopfbits R enthalten.

Das nächste Merkmal ist, daß jedes der im Pulsrahmen aufeinanderfolgenden n-Bit-Wörter wortweise zusammengesetzt wird, d.h. daß der Multiplexer im wesentlichen wortweise und somit mit einem deutlich niedrigeren Verarbeitungstakt als dem Bittakt des verarbeiteten Digitalsignals arbeitet.

Das letzte Merkmal besagt, daß das gesamte Stopfwort aus Bits des Digitalsignals gebildet wird und daß so viele Bits, wie in dem Stopfwort Stopfbits enthalten sein sollen, am Anfang des darauffolgend gebildeten Worts wiederholt werden. Im betrachteten Beispiel heißt dies, daß alle acht Bitpositionen des Stopfworts Z mit Bits I des Digitalsignals belegt werden, obwohl für das letzte Bit und bedarfsweise für das vorletzte Bit keine Bits des Digitalsignals (Information Bits I), sondern Stopfbits vorgesehen sind, und daß, wenn z.B. nicht nur das letzte Bit, sondern auch das vorletzte Bit ein Stopfbit sein soll, die beiden letzten Bits des Z-Worts als Anfangsbits des nächsten Worts wiederholt gesendet werden. Damit ist die Vorschrift erfüllt, daß die beiden letzten Bits des Stopfworts Z als Stopfbits betrachtet, d.h. bei der empfangsseitigen Verarbeitung entfernt, werden können. Hier macht die Erfindung davon Gebrauch, daß der Zustand der Stopfbits in der Vorschrift über den Pulsrahmen ausdrücklich undefiniert geblieben ist. Für den Fall eines Y-Worts, das an allen Bitpositionen Stopfbits R enthalten muß, bedeutet die Lösung, daß an der Stelle dieses Worts acht Bits des Digitalsignals (I-Bits) ausgegeben und diese acht Bits wiederholt werden, indem sie als darauffolgendes Wort ausgegeben werden.

Die Erfindung wird nun anhand der Zeichnungen beispielsweise näher erläutert. Es zeigen:
- Fig. 1a: ein grobes Blockschaltbild des erfindungsgemäßen Multiplexers zur Erläuterung seiner wesentlichen Merkmale,
- Fig. 1b: schematisch die Arbeitsweise des Multiplexers nach Fig. 1a anhand einer numerierten Folge von Bits des Digitalsignals D,
- Fig. 2a: ein Blockschaltbild eines Ausführungsbeispiels des neuen Multiplexers,
- Fig. 2b: schematisch die Eingabe einer Bitfolge des Digitalsignals D in den elastischen Speicher des Multiplexers nach Fig. 2a und die Ausgabe der nacheinander im Pulsrahmen aufeinanderfolgenden Wörter zur Erläuterung des Ausführungsbeispiels nach Fig. 2a,
- Fig. 3a: ein Blockschaltbild des erfindungsgemäßen Demultiplexers,
- Fig. 3b: schematisch die Arbeitsweise des Demultiplexers nach Fig. 3a anhand einer Wortfolge DS, die ein Stopfwort (Z) enthält,
- Fig. 4a und Fig. 4b: ein Ausführungsbeispiel des elastischen Speichers 50 des Multiplexers nach Fig. 2a mit Schaltungen zum Einschreiben und zum Auslesen gemäß Fig. 2b,
- Fig. 5a und Fig. 5b: ein Ausführungsbeispiel des elastischen Speichers 64 des Demultiplexers nach Fig. 3a mit Schaltungen zum Einschreiben und Auslesen gemäß Fig. 3 b, und
- Fig. 6: ein Ausführungsbeispiel des Adressengenerators 68 aus Fig. 5a.

Der nachstehenden Erläuterung der Erfindung liegt als Beispiel die Einfügung eines Digitalsignals mit der Bitfolgefrequenz 139 264 kbit/s in den Nutzsignalteil, den sogenannten "Payload-Bereich", eines STM-1-Signals (STM = Synchrones Transport Modul), genauer, in dessen "virtuellen Container" VC-4 nach der Vorschrift G.709, Fig. 5.2 und Fig. 5.3, zugrunde. Selbstverständlich ist die Erfindung jedoch auf jegliche Anwendungsfälle zu beziehen, bei denen die eingangs geschilderte Problematik des bitweisen Stopfens in einem wortweise strukturierten Pulsrahmen besteht.

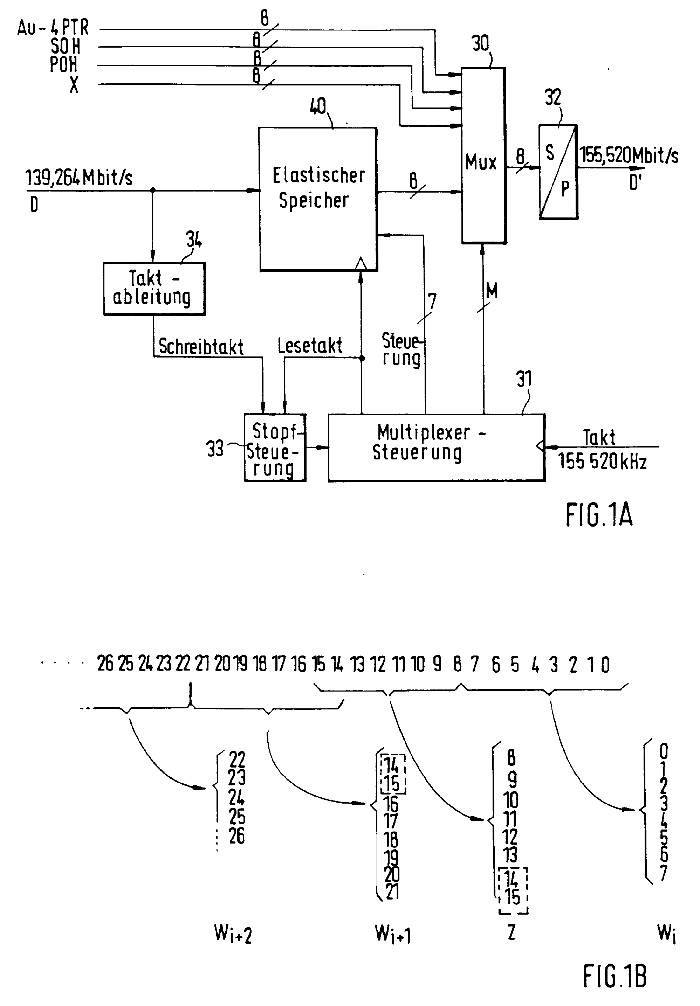

Gemäß der betrachteten Aufgabenstellung hat der in Fig. 1a gezeigte Multiplexer einen Eingang D für das Digitalsignal mit 139 264 kbit/s und Eingänge X, POH, SOH und Au-4 PTR für Zusatzinformationen, die in der genannten Vorschrift ebenso bezeichnet sind und aus irgendwelchen, nicht gezeigten Speichern stammen. Diese Zusatzinformationen sind nur wenige Bits, die in bestimmten Zeitabständen in den zu erzeugenden Pulsrahmen einzufügen sind. Am Ausgang des Multiplexers erscheint das Zeitmultiplexsignal, das sogenannte STM-1-Multiplexelement, mit dem vorgeschriebenen Pulsrahmen und der vorgeschriebenen Bitfolgefrequenz von 155 520 kbit/s, dessen wesentliches Multiplexelement der sogenannte "virtuelle Container" ist.

Damit das Digitalsignal und die Zusatzinformationen entsprechend dem Ausgangstakt des Multiplexers und gemäß dem vorgeschriebenen Pulsrahmen zu dem Zeitmultiplexsignal zusammengefügt werden kann, wird das Digitalsignal in einen elastischen Speicher 40 eingeschrieben. Zum Zusammenfügen d.h. zum eigentlichen Multiplexen dient eine Multiplexschaltung 30, die von einer Multiplexer-Steuerung 31 gesteuert wird. Die Multiplexschaltung 30 erhält ihre Eingangssignale, eines vom Ausgang des elastischen Speichers 40, eines vom Eingang X, eines vom Eingang POH, eines vom Eingang Au-4 PTR, und eines vom Eingang SOH, jeweils parallel über eine 8-Bit-Busleitung. Damit ist sie in der Lage, ihr Ausgangssignal wortweise zusammenzusetzen, indem sie acht parallele Bits zu ihrem Ausgang durchschaltet, die entweder acht Bits des Digitalsignals D oder acht Bits der Zusatzinformation X oder acht Bits der Zusatzinformation POH oder acht Bits der Zusatzinformation Au-4 PTR oder acht Bits der Zusatzinformation SOH sind. Die an dem Ausgang der Multiplexschaltung 30 erscheinende, aus verschiedenen Quellen zusammengesetzte Folge von 8-Bit-Wörtern wird in einem Seriell-Parallel-Wandler 32 in das gewünschte serielle Zeitmultiplexsignal D′ umgesetzt, das entsprechend dem vorgeschriebenen Pulsrahmen aufgebaut ist.

Zum Auslesen der Bits des Digitalsignals aus dem Speicher 40 gibt die Multiplexer-Steuerung 31 über eine Taktleitung einen Lesetakt an den Speicher 40 und legt damit die Zeitpunkte fest, zu denen der Speicher 40 jeweils acht Bits aus seinem Speicherinhalt auf seine Ausgangsleitung zur Multiplexschaltung 30 gibt. Gleichzeitig mit jedem Impuls des Lesetakts gibt die Multiplexer-Steuerung 31 über eine Steuerleitung M ein Signal zur Multiplexschaltung 30, das bewirkt, daß diese das aus dem Speicher 40 ausgelesene Wort von ihrem mit dem Speicherausgang verbundenen Eingang zu ihrem Ausgang durchschaltet. Zu Zeitpunkten, zu denen die eine oder die andere Zusatzinformation im Pulsrahmen vorhanden sein muß, steuert die Multiplexer-Steuerung 31 die Multiplexschaltung 30 so, daß sie diese Zusatzinformation vom entsprechenden Eingang zum Ausgang durchschaltet.

Der Lesetakt bestimmt also die Zeitpunkte, zu denen Bits des Digitalsignals aus dem Speicher 40 ausgelesen werden. Der Lesetakt ist von einem Takt abgeleitet, dessen Frequenz von 155 520 kHz gleich der Bitfolgefrequenz des vom Multiplexer zu erzeugenden Zeitmultiplexsignals ist. Dieser Takt ist ein Takt des synchronen Netzes und liegt an einem Takteingang der Multiplexer-Steuerung 31 an. Da der Takt des Digitalsignals gegenüber dem Takt des synchronen Netzes zeitlich schwanken kann (da er nicht aus diesem synchronen Netz stammt), ist vorgesehen, bedarfsweise ein Stopfbit in das Zeitmultiplexsignal einzufügen. 0b dieser Bedarf besteht, ermittelt eine Stopfsteuerung 33, die mit dem Lesetakt einen Schreibtakt vergleicht, mit dem das am Eingang D anliegende Digitalsignal in den Speicher eingeschrieben wird. Den Schreibtakt erzeugt eine Taktableitungsschaltung 34, die zunächst vom Digitalsignal dessen Bittakt ableitet und diesen mit beliebiger Phase durch acht dividiert. Die Stopfsteuerung zählt fortlaufend die Impulse des Lesetakts und die Impulse des Schreibtakts, ermittelt, ob bei der nächsten Gelegenheit gestopft werden muß und signalisiert dies der Multiplexer-Steuerung 31.

Damit trotz der vorstehend beschriebenen wortweisen Verarbeitung das vorgeschriebene bitweise Stopfen an der Wortposition Z des Pulsrahmens möglich ist, steuert die Multiplexer-Steuerung 31 das Auslesen des Digitalsignals aus dem Speicher 40 und damit den gesamten Multiplexer, wie es in Fig. 1b schematisch dargestellt ist.

Im Pulsrahmen aufeinanderfolgende aus Bits des Digitalsignals bestehende Wörter werden nacheinander aus dem Speicher 40 ausgelesen, wobei die Reihenfolge der Bits gegenüber der Reihenfolge, mit der sie am Eingang des Speichers auftreten, nicht vertauscht wird, d.h. solche Wörter sind das Ergebnis einer im Speicher oder vor dem Speicher stattgefundenen Seriell-Parallel-Wandlung mit einem durch die Multiplexer-Steuerung bestimmten Worttakt. Fig. 1b zeigt einen Ausschnitt aus einer Bitfolge des Digitalsignals, das in den Speicher vom Eingang D eingegeben wird. Die Bits der Bitfolge sind fortlaufend von rechts nach links, beginnend mit 0, numeriert. Mit Wᵢ ist ein Wort dargestellt, das durch wortweises Auslesen aus den mit 0 bis 7 numerierten Bits der Bitfolge gebildet ist. Folgt auf ein solches Wort im Pulsrahmen das Wort Z, das an seinem Ende eines, bedarfsweise auch zwei Stopfbits enthalten soll, so wird erfindungsgemäß auch dieses Wort aus den darauffolgenden Bits 8 bis 15 gebildet, indem als Wort Z, das auch Stopfwort genannt werden kann, diese Bits parallel zum Ausgang des Speichers 40 durchgeschaltet werden. Das darauffolgende Wort Wᵢ₊₁, das gemäß dem Pulsrahmen ausschließlich aus Bits des Digitalsignals bestehen soll, wird nun aber nicht aus den sich an die Bits des Worts Z anschließenden Bits 16 bis 24 gebildet, sondern aus den Bits 14 bis 21, d.h. am Anfang dieses Wortes Wᵢ₊₁ werden zunächst die Bits 14 und 15 des Worts Z wiederholt, da diese Bits die beiden letzten Bitpositionen des Z-Wortes belegen, die aber zwei Stopfbits enthalten sollen.

In anderen Worten: die Multiplexer-Steuerung sorgt dafür, daß auch ein Stopfwort Z durch Auslesen von acht sich an das vorhergehende Wort anschließenden Bits aus dem Speicher gebildet wird und daß dann zur Bildung des nächsten Wortes eine Anzahl l (z.B.2) Bits vom Ende des Z-Wortes wiederholt ausgelesen werden, bevor sich daran neue Bits anschließen, wenn das Z-Wort l Stopfbits enthalten soll. Als Speicher 40 kann jede Schaltung verwendet werden, mit der es möglich ist, wie anhand von Fig. 1b gezeigt, entweder Gruppen von aufeinanderfolgenden Bits auszulesen oder von dieser normalen Folge abzuweichen, indem beim Auslesen mindestens eines der letzten Bits eines Worts am Anfang des darauffolgenden Worts wiederholt wird.

Auf diese Weise ist, wie durch Fig. 1b eindrucksvoll gezeigt, es erreicht, daß alle Wörter des Pulsrahmens wortweise gebildet werden, da bei jedem Auslesevorgang ein vollständiges Wort entsteht, und daß trotzdem wie gefordert mindestens das letzte, im gezeigten Beispiel nach Fig. 1b die beiden letzten Bits, Stopfbits sind, d.h. in einem das Zeitmultiplexsignal verarbeitenden Demultiplexer wieder entfernt werden können. Hierzu macht die Erfindung von der Tatsache Gebrauch, daß der Zustand der Stopfbits in der Vorschrift ausdrücklich undefiniert geblieben ist und daß das Digitalsignal ohne Rücksicht auf seine innere Struktur verarbeitet werden kann.

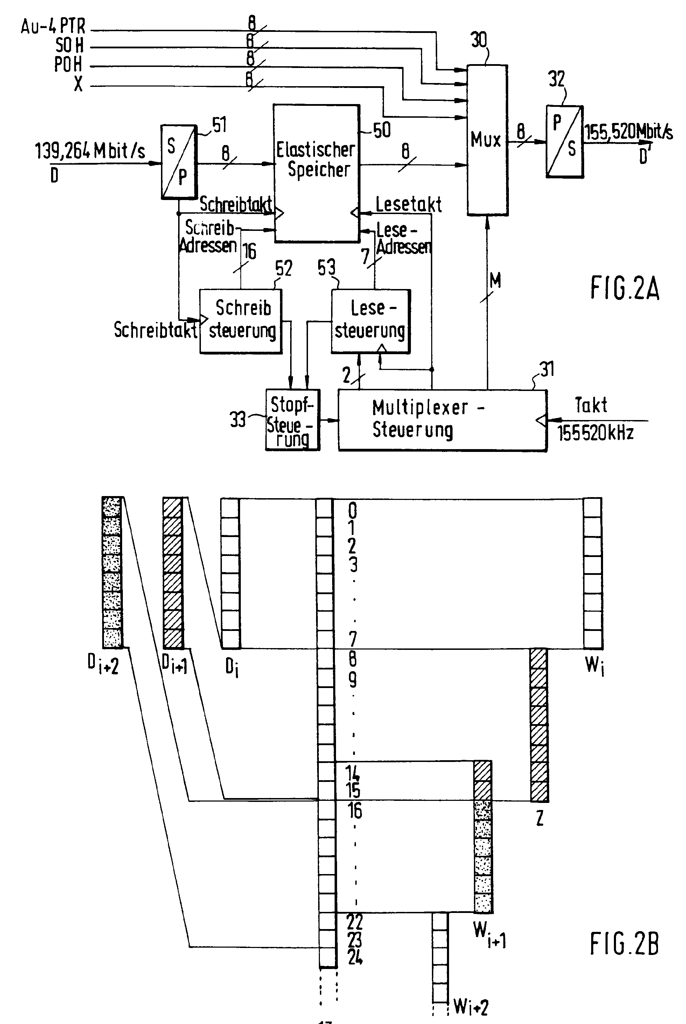

Anhand von Fig. 2a und 2b wird nun ein detaillierteres Ausführungsbeispiel des elastischen Speichers und seiner erfindungsgemäßen Ansteuerung erläutert, der das anhand von Fig. 1b schematisch dargestellte Prinzip der Erfindung erfüllt.

Der Multiplexer nach Fig. 2a unterscheidet sich von dem nach Fig. 1a dadurch, daß der elastische Speicher, der hier das Bezugszeichen 50 trägt, eine Speicherorganisation hat, die anhand von Fig. 2b erläutert wird, daß für das Digitalsignal ein Seriell-Parallel-Wandler 51 vorhanden ist, so daß das Digitalsignal in Gruppen von acht Bits parallel in den elastischen Speicher 50 eingegeben wird, daß eine Schreib-Steuerung 52 vorhanden ist, die das Einschreiben des Digitalsignals, wie noch zu erläutern ist, steuert und daß eine Lese-Steuerung 53 vorhanden ist, die das Auslesen der im elastischen Speicher 50 gespeicherten Bits, wie noch zu beschreiben ist, steuert.

Die übrigen Bestandteile des Multiplexers unterscheiden sich nicht von denen des Multiplexers nach Fig. 1a, die mit denselben Bezugszeichen versehen sind.

Das am Eingang D des Multiplexers seriell erscheinende Digitalsignal setzt der Seriell-Parallel-Wandler 51 in aufeinanderfolgende 8-Bit-Wörter um und gibt diese in Parallelform an seinen Ausgängen aus, von wo sie in dieser Parallelform in den elastischen Speicher 50 eingeschrieben werden. Das Einschreiben geschieht mit dem Takt, mit dem der Seriell-Parallel-Wandler 51 seine aufeinanderfolgenden 8-Bit-Wörter ausgibt. Dieser Takt ist also der Schreibtakt des elastischen Speichers 50, und er wird im folgenden auch Worttakt genannt. Da die innere Struktur des Digitalsignals für die Übertragung über das synchrone Netz keine Rolle spielt (transparente Übertragung), sind die Wortgrenzen, die der Seriell-Parallel-Wandler durch seine Arbeitsweise festlegt, beliebig, d.h. die Phase seines Worttakts ist beliebig.

Die Schreibsteuerung 52 arbeitet mit diesem Worttakt und bestimmt, auf welche Speicherplätze ein vom Seriell-Parallel-Wandler 51 ausgegebenes 8-Bit-Wort jeweils in den elastischen Speicher eingeschrieben wird, indem sie Schreibadressen generiert und das Einschreiben entsprechend steuert.

So wie zum Einschreiben der Worttakt des Seriell-Parallel-Wandlers 51 die Einschreib-Zeitpunkte bestimmt, so bestimmt ein von der Multiplexer-Steuerung 31 erzeugter Lesetakt die Zeitpunkte, zu denen ein 8-Bit-Wort in Parallelform aus dem elastischen Speicher 50 ausgelesen wird. Von welchen Speicherplätzen es jeweils auszulesen ist, bestimmt die Lese-Steuerung 53, indem sie Leseadressen generiert und das Auslesen entsprechend steuert.

Fig. 2b zeigt schematisch die Organisation des elastischen Speichers 50 und die Steuerung des Einschreibens und des Auslesens gemäß der Erfindung. Der elastische Speicher hat als Speicherzellen eine parallele Anordnung von z.B. 128 1-Bit-Speicherzellen, kann also 128 Bits = 16 8-Bit-Wörter gleichzeitig speichern. In Fig. 2b ist ein Teil dieser Speicherzellen dargestellt und fortlaufend numeriert, beginnend mit 0. Die Schreib-Steuerung 52 steuert eine nicht gezeigte, den Speicherzellen vorgeschaltete Schaltung so, daß aufeinanderfolgende Bits des Digitalsignals Speicherzellen mit aufeinanderfolgenden Adressen belegen. Dies bedeutet, daß die ersten acht Bits (Dᵢ) des Digitalsignals in die ersten acht Speicherzellen, die mit 0 bis 7 numeriert sind, eingeschrieben werden, die zweiten acht Bits (Dᵢ₊₁) des Digitalsignals in die zweiten acht Speicherzellen, die mit 8 bis 15 numeriert sind, und die dritten acht Bits (Dᵢ₊₂) des Digitalsignals in die nächsten Speicherzellen, also die Zellen 16 bis 23 eingeschrieben werden, u.s.w. Dieses Einschreiben geschieht, wie es in der Fig. 2b symbolisch dargestellt ist, wortweise und in Parallelform (Das erste Wort ist durch acht leere Kästchen, das zweite Wort durch acht Schraffierte Kästchen und das dritte Wort durch acht gepunktete Kästchen angedeutet).

Das Auslesen wird nun von der Lese-Steuerung 53 über eine nicht dargestellte Logikschaltung so gesteuert, daß aufeinanderfolgend eingeschriebene Wörter ebenso wortweise nacheinander ausgelesen werden, wenn der zu erzeugende Pulsrahmen Wörter verlangt, die nur aus Bits des Digitalsignals bestehen sollen, z.B. ist das Wort Wᵢ ein solches Wort.

Aber auch, wenn der Pulsrahmen ein Stopfwort Z verlangt, dessen letztes oder auch dessen beide letzten Bits Stopfbits sein sollen, geschieht das Auslesen in dieser Weise, wie die Fig. 2b zeigt, indem als Z-Wort das Wort ausgegeben wird, das als ein auf das zuvor ausgegebene Wort Wᵢ folgende Wort im Speicher ist (die acht schraffierten Kästchen).

Die Leseadressen werden also, solange das Auslesen in dieser Weise funktioniert, mit jedem Impuls des Lesetakts um acht erhöht. Nach dem Auslesen des Z-Wortes, das z.B. zwei Stopfbits enthalten soll, wird jedoch von dieser Arbeitsweise abgewichen, indem beim nächsten Auslesezeitpunkt die Leseadresse nicht um acht, sondern nur um sechs erhöht wird. Das auf das Z-Wort folgende Wort (Wᵢ₊₁) wird somit nicht aus den Speicherzellen 16 bis 23, sondern aus den Speicherzellen 14 bis 21 ausgelesen, so daß, wie die symbolische Darstellungsweise zeigt, am Anfang des auf das Z-Wort folgenden Worts Wᵢ₊₁ die beiden letzten Bits des Z-Worts (von den Speicherzellen 14 und 15) wiederholt werden. Das auf das Wort Wᵢ₊₁ folgende Wort Wᵢ₊₂ ergibt sich wieder durch "normales" Erhöhen der Leseadressen um acht, d.h. beginnend mit der Speicherzelle 22. Somit haben die in Fig. 2b dargestellten Wörter Wᵢ, Z und Wᵢ₊₁ dieselbe Eigenschaft wie die in Fig. 1b dargestellten entsprechend bezeichneten Wörter, daß eine Wiederholung derjenigen Bits, die im Stopfwort Z enthalten sein sollen, im darauffolgend in den Pulsrahmen eingefügten Wort stattfindet.

Wieviele Bits wiederholt werden, hängt davon ab, wieviele Bits im Z-Wort Stopfbits sein sollen. Im Beispiel ist der Fall gezeigt, daß die beiden letzten Bits Stopfbits sein sollen. Wie ohne weiteres ersichtlich ist, kann eine beliebige Anzahl von Stopfbits berücksichtigt werden, sofern diese Stopfbits, was in der eingangs genannten Vorschrift der Fall ist, das Ende des Z-Wortes bilden. Im allgemeinen werden also die Leseadressen mit jedem Taktimpuls um 8-l verschoben, wobei l die Zahl der Stopfbits ist, die in einem Wort des Pulsrahmens enthalten sein sollen.

Soll ein Wort, wie das Wort Y in dem genannten vorgeschriebenen Pulsrahmen, ausschließlich aus Stopfbits bestehen, so ist l = 8, was bedeutet, daß es ausschließlich aus Bits des Digitalsignals gebildet wird und daß beim Auslesen des darauffolgenden Worts die Leseadressen überhaupt nicht verschoben werden, so daß das auf das Stopfwort Y folgende Wort die Bits des Stopfworts alle wiederholt. Soll ein Wort nur aus Bits des Digitalsignals bestehen, so ist l=0 d.h. nach Auslesen eines solchen Worts werden die Leseadressen um acht verschoben.

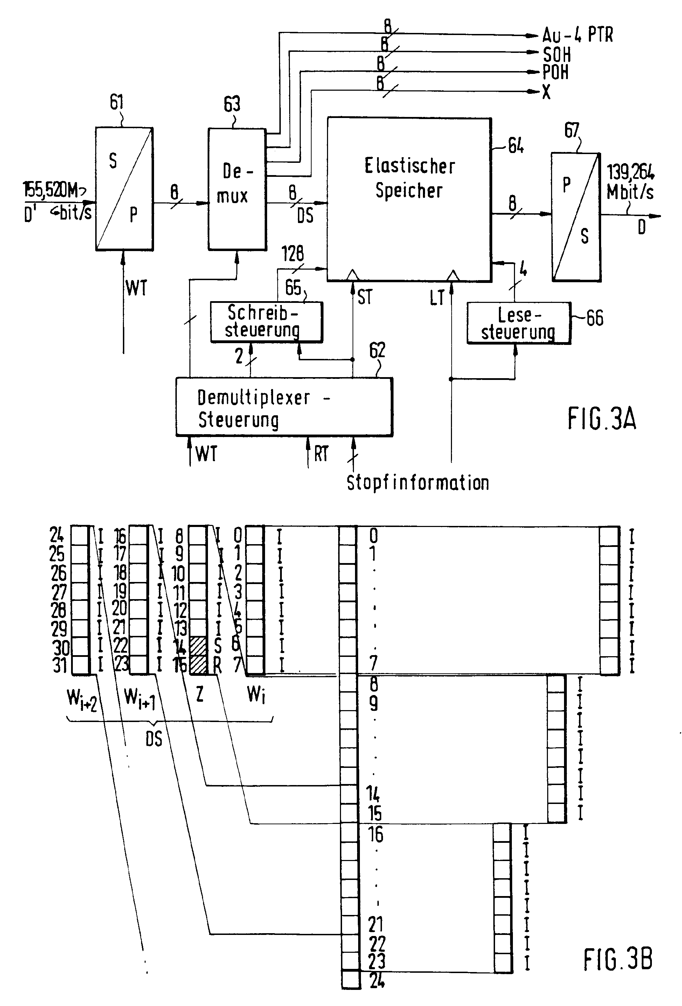

Fig. 3a zeigt ein Blockschaltbild eines Demultiplexers für ein Digitalsignal mit einem wortweise strukturierten Pulsrahmen, das bitweise gestopft ist. Beispielsweise ist ein Multiplexsignal STM-1 nach der CCITT-Empfehlung G 709 ein solches Digitalsignal, wenn es einen "virtuellen Container" VC-4 gemäß Fig. 5.3 derselben Empfehlung enthält. Seine Bitfolgefrequenz beträgt 155,520 Mbit/s. Ein solches Digitalsignal, mit D′ bezeichnet, gelangt vom Eingang des Demultiplexers in serieller Form auf den Eingang eines Seriell-Parallel-Wandlers 61 und wird dort gemäß seinem Pulsrahmen in 8-Bit-Wörter umgesetzt, die in Parallelform an seinem Ausgang erscheinen. Den dazu notwendigen Worttakt des Digitalsignals D′ leitet eine nicht gezeigte Synchronisierschaltung vom Digitalsignal D′ ab und gibt ihn auf einen Takteingang des Seriell-Parallel-Wandlers 61.

Die nicht gezeigte Synchronisierschaltung leitet vom empfangenen Digitalsignal D′ außer dem Worttakt auch den Rahmentakt ab und gibt den Worttakt WT und den Rahmentakt RT in eine Demultiplexer-Steuerung 62 ein, damit diese in der Lage ist, das empfangene Digitalsignal D′ gemäß seinem Pulsrahmen zu zerlegen.

Hierzu steuert die Demultiplexer-Steuerung 62 eine Demultiplex-Schaltung 63, die an ihrem Eingang die vom Ausgang des Seriell-Parallel-Wandlers 61 ausgegebene Folge von 8-Bit-Wörtern in Parallelform empfängt. Die Demultiplex-Schaltung 63 wird von der Demultiplexer-Steuerung 62 so gesteuert, daß sie die in dem Zeitmultiplexsignal D′ enthaltenen Zusatzinformationen POH, SOH, Au-4 PTR und X an den ebenso bezeichneten Ausgängen ausgibt und diejenigen Wörter des Zeitmultiplexsignals D′, die Bits des Digitalsignals enthalten, an einem weiteren Ausgang, der mit DS bezeichnet ist, ausgibt. Die letzteren Wörter sind Wörter, die aus Bits des Digitalsignals zusammengesetzt sind und Stopfwörter, die sowohl Bits des Digitalsignals als auch (an ihrem Ende) mehr oder weniger Stopfbits enthalten.

Die genannte Folge DS von Wörtern, die Bits des Digitalsignals enthalten, wird in einen elastischen Speicher 64 eingegeben, der die Aufgabe hat, Stopfbits zu eliminieren und für eine Taktanpassung zu sorgen. Die Taktanpassung geschieht dadurch, daß das Einschreiben der Wörter der Folge DS mit einem Schreibtakt ST geschieht, den die Demultiplexer-Steuerung vom Rahmentakt RT und vom Worttakt WT des Digitalsignals D′ und damit vom synchronen Netz ableitet und daß das Auslesen aus dem Speicher mit einem Lesetakt LT erfolgt, der wie an späterer Stelle erläutert wird, von einem lokalen Oszillator erzeugt wird. Wie die Zeichnung zeigt, geschieht sowohl das Einschreiben in den elastischen Speicher als auch das Auslesen aus dem elastischen Speicher ebenso wie die Zerlegung des Digitalsignals D′ in der Demultiplex-Schaltung 63 wortweise, so daß der überwiegende Teil des Demultiplexers den Vorteil hat, daß er mit einer relativ niedrigen Taktfrequenz arbeitet.

Trotz dieser wortweisen Verarbeitung wird, wie im folgenden erläutert wird, die Aufgabe gelöst, die bitweise gestopften Bits zu eliminieren. Der Schreibtakt ST bestimmt die Zeitpunkte, zu denen ein von der Demultiplex-Schaltung 63 ausgegebenes Wort der Wortfolge DS in den elastischen Speicher eingegeben wird. Es sind dies einfach die Zeitpunkte, zu denen es vom Demultiplexer ausgegeben wird, d.h. die Zeitpunkte, zu denen der Demultiplexer ein Ausgangswort auf seiner mit DS bezeichneten Leitung ausgibt. Die Schreib-Steuerung 65 steuert, in welche Speicherzellen des elastischen Speichers 64 ein Wort der Wortfolge DS eingeschrieben wird. Auf der anderen Seite des elastischen Speichers 64 steuert die Lese-Steuerung 66, aus welchen Speicherzellen ein 8-Bit-Wort ausgelesen wird, wenn ein Impuls des Lesetakts bestimmt, daß ein solches ausgelesen wird.

Gesteuert wird die Schreib-Steuerung 65 von der Demultiplexer-Steuerung 62, die ihr signalisiert, ob ein gerade einzuschreibendes Wort ein Stopfwort ist und wieviel Stopfbits es enthält. Hierzu erhält die Demultiplexer-Steuerung 62 wiederum eine Stopfinformation, die der Demultiplexer mittels einer nicht gezeigten Stopfauswertung aus der empfangenen Zusatzinformation X gewinnt.

Anhand von Fig. 3 b wird nun gezeigt, auf welche Weise die Schreib-Steuerung 65 das Einschreiben in den elastischen Speicher 64 steuert. Der elastische Speicher hat als Speicherzellen eine parallele Anordnung von z.B. 128 1-Bit-Speicherzellen, kann also 128 Bits = 16 8-Bit-Wörter gleichzeitig speichern. In Fig. 3 b ist ein Teil dieser Speicherzellen dargestellt und fortlaufend numeriert, beginnend mit 0. Auf der linken Seite der Speicherzellen sind Wörter der zu verarbeitenden Wortfolge DS schematisch dargestellt. Der gezeigte Teil dieser Wortfolge besteht aus einem ersten Wort Wᵢ, das nur Bits I des Digitalsignals enthält, einem zweiten Wort Z, das ein Stopfwort ist und an seinen letzten Bitpositionen zwei Stopfbits S, R und ansonsten Bits I des Digitalsignals enthält, und zwei weiteren Wörtern Wᵢ₊₁ und Wᵢ₊₂, die ausschließlich aus Bits I des Digitalsignals bestehen. Die Bits dieser Wortfolge sind fortlaufend mit Nummern 0 bis 31 numeriert, so daß die beiden Stopfbits S und R die Bits Nummer 14 und 15 dieser Wortfolge sind.

Die Wörter dieser Wortfolge werden wortweise in den elastischen Speicher eingeschrieben, also mit einem ersten Impuls des Schreibtakts ST (Fig.3a) das erste Wort Wᵢ, mit einem zweiten Impuls des Schreibtakts ST das zweite Wort Z u.s.w., wobei die Bits eines Wortes jeweils parallel eingeschrieben werden. Die Schreibsteuerung 65 (Fig. 3a) steuert eine nicht gezeigte Logikschaltung so, daß aufeinanderfolgend eingehende Wörter im Normalfall in Speicherzellen mit aufeinanderfolgenden Adressen eingeschrieben werden, also wie gezeigt das erste Wort Wᵢ in Speicherzellen 0 bis 7 und das zweite Wort Z in Speicherzellen 8 bis 15. Im Sonderfall, daß ein in den Speicher eingeschriebenes Wort ein Stopfwort ist und wie das Stopfwort Z beispielsweise zwei Stopfbits S, R an seinen beiden letzten Bitpositionen enthält, steuert die Schreib-Steuerung 65 die Logikschaltung so, daß das darauffolgende Wort Wᵢ₊₁ so in den Speicher eingeschrieben wird, daß die Stopfbits des zuvor eingeschriebenen Stopfworts dabei überschrieben werden. Das auf das Z-Wort folgende Wort Wᵢ₊₁ wird somit nicht in die Speicherzellen 16 bis 23, sondern in die Speicherzellen 14 bis 21 eingeschrieben, so daß dadurch die zuvor in die Speicherzellen 14 und 15 eingeschriebene Stopfbits S und R überschrieben und damit für die weitere Verarbeitung eliminiert werden. Da das Wort Wᵢ₊₁ keine Stopfbits enthält, wird das darauffolgende Wort Wᵢ₊₂ in die Speicherzellen mit den anschließenden Speicheradressen 22 bis 29 eingeschrieben.

Wie das Beispiel zeigt, werden also jeweils nach dem Einschreiben eines n-Bit-Wortes (im Beispiel ist n=8) der Folge DS von Bits I des Digitalsignals D enthaltenden Wörtern die Schreibadressen um n verschoben, jedoch, wenn das eingeschriebene Wort ein Stopfwort war, nur um n - l, wobei l die Anzahl der in dem Stopfwort enthaltenen Stopfbits ist. Auf diese Weise ist es erreicht, das die Wortfolge einerseits wortweise verarbeitet und andererseits trotzdem bitweise von mehr oder weniger Stopfbits befreit ("entstopft") wird.

Durch die beschriebene Art des Einschreibens ist dafür gesorgt, daß im elastischen Speicher die Bits I des Digitalsignals entsprechend ihrer Reihenfolge, mit der sie im Digitalsignal enthalten sind, gespeichert sind. Die Lesesteuerung 66 hat also nur dafür zu sorgen, daß sie auch in dieser Reihenfolge ausgelesen werden. Im einfachsten Fall geschieht dies ebenfalls wortweise, so daß wie gezeigt zu einem ersten Zeitpunkt z.B. 8 Bits 0 bis 7 aus den Speicherzellen 0 bis 7, zu einem zweiten Zeitpunkt 8 Bits 8 bis 15 aus den Speicherzellen 8 bis 15 und zu einem dritten Zeitpunkt 8 Bits aus den Speicherzellen 16 bis 23 ausgelesen werden u.s.w., und zwar jeweils in Parallelform. Durch einfache Parallel-Seriell-Wandlung in einem Parallel-Seriell-Wandler 67 (Fig. 3a) entsteht aus dieser Wortfolge das übertragene Digitalsignal D mit der Bitfolgefrequenz von 139,264 Mbit/s.

Wie beim Einschreiben des Digitalsignals D in den elastischen Speicher 50 des Demultiplexers nach Fig. 2a die Phase des Worttakts beliebig gewählt werden kann, kann auch beim Auslesen aus dem elastischen Speicher 64 des Demultiplexers nach Fig. 3a die Phase des Worttakts beliebig gewählt werden, da das Digitalsignal D ohne Rücksicht auf seine innere Struktur, also transparent übertragen werden kann.

Als Schreibsteuerung 65 und als Lesesteuerung 66 ist jede Steuerschaltung geeignet, die das in Fig. 3b Dargestellte leistet.

Bei dem vorstehend beschriebenen Ausführungsbeispiel ist die Wortfolge DS nur ein Teil der Wortfolge, die von dem Seriell-Parallel-Wandler 61 ausgegeben wird. Er besteht nämlich nur aus solchen Wörtern, die Bits I des Digitalsignals enthalten, entweder ausschließlich oder zum Teil.

Gemäß einer vorteilhaften Alternative kann in den Speicher auch die gesamte Wortfolge, wie sie vom Seriell-Parallel-Wandler 61 ausgegeben wird, in den elastischen Speicher 64 eingegeben werden. Die Demultiplex-Schaltung arbeitet in diesem Falle so, daß sie wie gezeigt, zwar die Zusatzinformationen wie SOH, POH, X, Au-4 PTR an den entsprechend bezeichneten Ausgängen ausgibt, jedoch in der Wortfolge, die sie zum elastischen Speicher 64 überträgt, beläßt. Die Schreib-Steuerung steuert dann das Einschreiben so, daß nach dem Einschreiben eines solchen Wortes die Schreibadressen überhaupt nicht verschoben werden und das eingeschriebene Wort daraufhin überschrieben wird. In anderen Worten: jedesmal wenn irgendwelche Speicherzellen mit einem solchen Wort belegt werden, werden sie durch das darauffolgende Wort überschrieben, so daß ein solches Wort beim Auslesen des Speichers nicht mehr existiert, als ob es überhaupt nicht eingeschrieben worden wäre. Diese Alternative hat den Vorteil, daß als Takt für die Schreibsteuerung und als Schreibtakt der Worttakt WT, der ein lückenloser Takt ist, verwendet werden kann und nicht ein solche Wörter ausblendender lückenhafter Takt in der Demultiplexer-Steuerung erzeugt werden muß.

Zu dem elastischen Speicher ist noch zu sagen, daß sowohl das Einschreiben als auch das Auslesen zyklisch erfolgt, d.h. daß nach dem Einschreiben in die Speicherzellen mit den höchsten Speicheradressen bzw. Auslesen aus den Speicherzellen mit den höchsten Speicheradressen das weitere Einschreiben bzw. Auslesen beginnend bei den niedrigsten Speicheradressen fortgesetzt wird. Für das Verschieben der Speicheradressen sorgt in der Schreib- und in der Lese-Steuerung jeweils ein zyklischer Zähler, der zu jedem Einschreib- und Auslesevorgang im Normalfall um 8 fortgeschaltet wird, mit der Besonderheit, daß in der Lese-Steuerung des Multiplexers und in der Schreib-Steuerung des Demultiplexers ein zyklischer Zähler enthalten ist, der so steuerbar ist, daß er wahlweise statt um 8 Schritte 7, 6 oder bei Bedarf auch weniger Schritte fortschaltbar ist.

Anhand der nachstehenden Figuren werden noch Ausführungsbeispiele der Schreib-Steuerung, der Lese-Steuerung und der Logikschaltungen des elastischen Speichers erläutert.

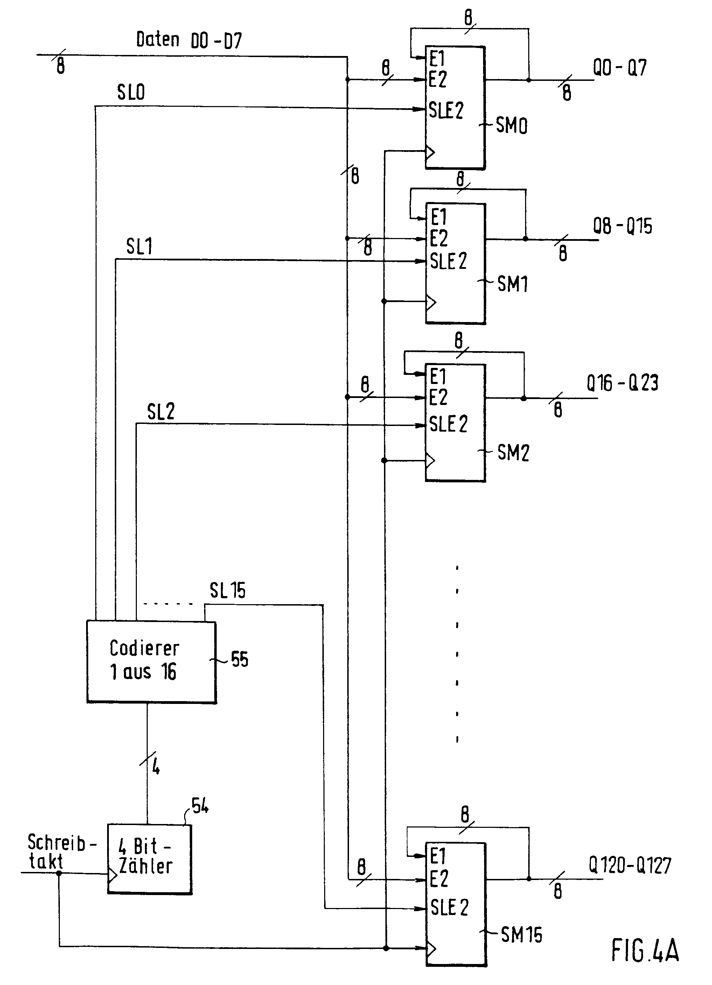

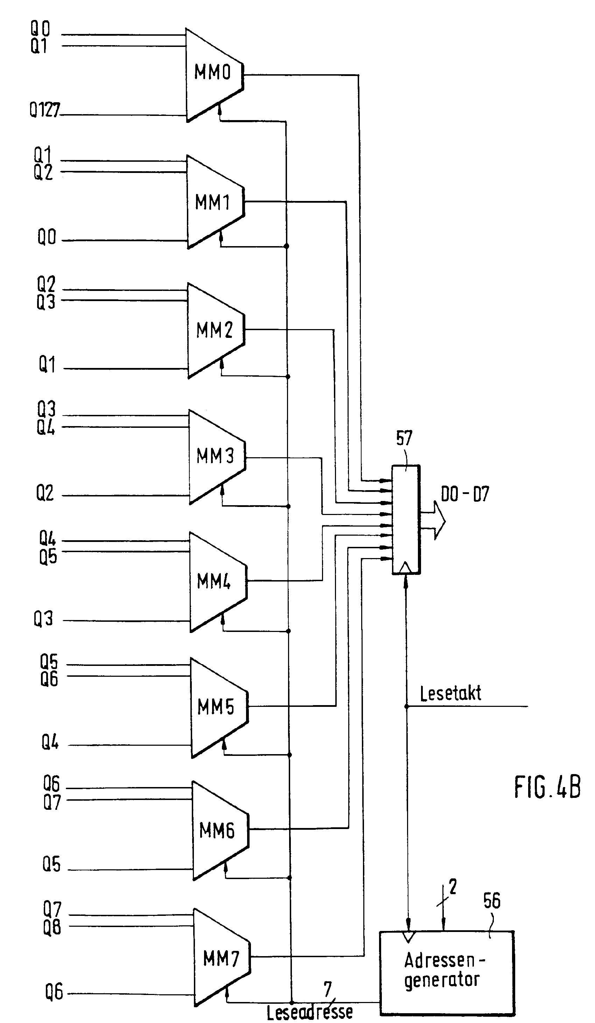

Anhand von Fig. 2a und Fig. 2b wurde oben die Funktionsweise des elastischen Speichers des Multiplexers einschließlich der Schreib-Steuerung und der Lese-Steuerung grob erläutert. Anhand von Fig. 4a und Fig. 4b wird nun deren Aufbau und Wirkungsweise genauer erläutert. Die in Fig. 2b durch jeweils 1 Kästchen angedeutete Anordnung von 1-Bit-Speicherzellen, die dort, beginnend mit Null fortlaufend numeriert ist, ist in Fig. 4a zur Vereinfachung in 8 Blöcke SM0 bis SM15 eingeteilt, wobei jeder der Blöcke eine parallele Anordnung von 8 1-Bit-Speicherzellen ist. Die in Fig. 2a gezeigte 8-Bit-Eingangsleitung des elastischen Speichers 50 ist mit den Eingängen jedes der Blöcke SM0 bis SM15 verbunden, so daß ein auf dieser Leitung parallel in den elastischen Speicher eingegebenes Datenwort, dessen Bits mit D0 bis D7 bezeichnet sind, in jeden der Speicherblöcke eingegeben werden kann.

Die 8 Parallel-Eingänge, in die ein Datenwort eingegeben werden kann, sind bei jedem der Blöcke mit E2 bezeichnet, was bedeuten soll, daß jede Speicherzelle eines Blocks einen Eingang E2 für eines der Bits D0 bis D7 hat. Die einzelnen Leitungen der 8-Bit-Eingangsleitung eines Blocks sind mit Eingängen E2 verschiedener 1-Bit-Speicherzellen eines Blocks verbunden, derart, daß das Bit D0 am Eingang E2 der ersten Speicherzelle, das Bit D1 am Eingang E2 der zweiten Speicherzelle eines Blocks anliegt usw. Die Ausgänge des Blocks SM0 sind mit Q0 bis Q7 bezeichnet, die des Blocks SM1 mit Q8 bis Q15 usw., was bedeuten soll, daß z.B. bei SM0 der Ausgang Q0 der Ausgang der ersten 1-Bit-Speicherzelle von SM0, Q1 der Ausgang der zweiten Speicherzelle von SM0 ist usw. Wie gezeigt, sind sämtliche Ausgänge eines Blocks auf Eingänge entsprechender Speicherzellen, die jeweils mit E1 bezeichnet sind, rückgeführt.

Jede Speicherzelle eines Blocks hat einen Steuereingang, der für jeden Block mit SLE2 bezeichnet ist, was bedeutet, daß alle 8 Speicherzellen eines Blocks dasselbe Steuersignal an ihrem Steuereingang SLE2 empfangen. Mit diesem Steuersignal kann gesteuert werden, ob eine Speicherzelle das an ihrem Eingang E2 anliegende Bit oder das an ihrem Eingang E1 anliegende Bit (von ihrem Ausgang) einspeichert, wenn an ihrem Takteingang ein Taktimpuls erscheint (SLE2 = "Select E2"). Beispielsweise wird bei einer Eins am Steuereingang das am Eingang E2 anliegende Bit, bei einer Null am Steuereingang das am Eingang E1 anliegende Bit eingegeben, d.h. bei einer Eins am Steuereingang wird ein neues Bit in den Speicher eingegeben, wogegen bei einer Null am Steuereingang das bereits gespeicherte Bit vom Ausgang auf den Eingang 1 rückgeführt, also der Zustand der Speicherzelle nicht verändert wird.

Die Speicherblöcke SM0 bis SM15 erhalten ihr Steuersignal jeweils über Steuerleitungen SL0 bis SL15, d.h. daß z.B. ein am Eingang des Speichers erscheinendes Datenwort in den Speicherblock SM0 eingespeichert wird, wenn SL0 gleich 1 ist. Sind die Steuersignale SL1 bis SL15 dann gleich 0, so wird das Datenwort lediglich in den Block SM 0 eingespeichert und die anderen Speicherblöcke behalten ihren Zustand. Damit ist es möglich, aufeinanderfolgende Datenwörter Dᵢ wie in Fig. 2b gezeigt in aufeinanderfolgende Speicherblöcke einzuschreiben, nämlich ein erstes Wort Dᵢ in einen Speicherblock bestehend aus Speicherzellen 0 bis 7 (Speicherblock SM 0), ein zweites Datenwort Dᵢ₊₁ in einen zweiten Speicherblock mit Speicherzellen 8 bis 15 (Speicherblock SM1), ein drittes Datenwort Dᵢ₊₂ in einen dritten Speicherblock mit Speicherzellen 16 bis 23 (Speicherblock SM2 usw.).

Die genannten Steuersignale auf den Steuerleitungen SL0 bis SL15 liefert die in Fig. 2 gezeigte Schreibsteuerung 52, die gem. Fig. 4a besteht aus einem 4-Bit-Binärzähler 54 und einem 1-aus-16-Codierer 55. Der 4-Bit-Zähler 54 empfängt als Zähltakt den in Fig. 2a gezeigten Schreibtakt, d.h. den Takt, mit dem die Datenwörter nacheinander in den elastischen Speicher eingegeben werden und zählt zyklisch von 0 bis 15. Der Codierer 55 codiert jeden der Zählerstände so, daß er bei jedem Zählerstand auf genau einer von 16 Ausgangsleitungen eine Eins ausgibt, nämlich beim Zählerstand 0000 eine 1 auf der Ausgangsleitung SL0, beim Zählerstand 0001 eine 1 auf der Ausgangsleitung SL1, beim Zählerstand 0010 eine 1 auf der Ausgangsleitung SL2 usw. und schließlich beim Zählerstand 1111 (= 15) eine 1 auf der Ausgangsleitung SL15. Dadurch werden die im Schreibtakt aufeinanderfolgenden Datenwörter wie in Fig. 2b gezeigt, in Speicherzellen mit aufeinanderfolgenden Adressen eingeschrieben.

Die gezeigten Speicherblöcke SM0 bis SM15 haben insgesamt 128 Ausgänge, die wie gezeigt mit Q0 bis Q127 bezeichnet sind.

Die im Zusammenhang mit Fig. 2b erwähnte, dort nicht gezeigte, Logikschaltung zum Auslesen und die Lese-Steuerung 53 werden anhand von Fig. 4b ausführlicher erläutert. Die Logikschaltung besteht aus einer parallelen Anordnung von acht Multiplexschaltungen MM0 bis MM7, von denen jede 128 Eingänge hat und in der Lage ist, gesteuert von einem 7-Bit-Steuerwort einen der Eingänge auf ihren Ausgang durchzuschalten. Diese Eingänge sind wie folgt mit den in Fig. 4a gezeigten Speicherausgängen verbunden: Mit dem ersten Eingang jeder der Multiplexschaltung (in der Zeichnung der oberste Eingang sind die Ausgänge Q 0 bis Q 7 des Speicherblocks SM0 aus Fig. 4a verbunden. Ein an Ausgängen Q0 bis Q7 ausgegebenes Datenwort liegt also an den ersten Eingängen der Multiplexschaltungen MM0 bis MM7 an. Die zweiten Eingänge der Multiplexschaltungen sind mit Ausgängen Q1 bis Q8 des elastischen Speichers verbunden, die dritten Eingänge (nicht gezeigt) mit Q2 bis Q9 usw. und die 128. Eingänge mit den Ausgängen Q127 bis Q6.

An ihren Steuereingängen (7 Bits) erhalten alle Multiplexschaltungen dasselbe 7-Bit-Steuerwort, die sogenannte Leseadresse. Die Multiplexschaltungen MM0 bis MM7 arbeiten so, daß sie bei einer Leseadresse 0 ihre ersten Eingänge, also die Eingänge Q0 bis Q7, auf ihre Ausgänge durchschalten, bei einer Leseadresse 1 ihre zweiten Eingänge also Q1 bis Q8 usw., z.B. bei einer Leseadresse 14 (binär 0001110) ihre 15. Eingänge Q14 bis Q21 und bei einer Leseadresse 127 (binär 1111111) ihre letzten Eingänge Q127 bis Q6 auf ihre Ausgänge durchschalten. Damit ist es möglich, eine beliebige Speicheradresse auszuwählen und aus dieser Speicheradresse und den nachfolgenden 7 Speicheradressen ein 8-Bit-Wort aus dem Speicher parallel auszulesen.

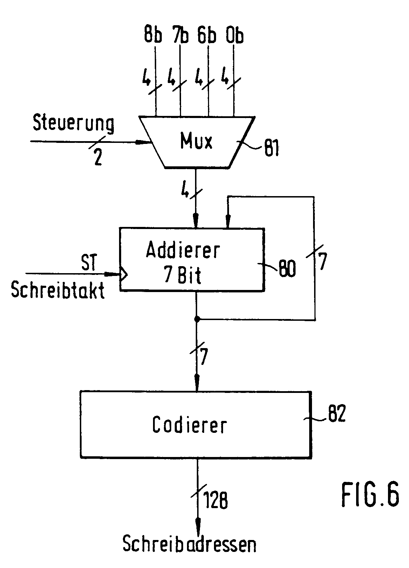

Die Leseadressen liefert ein Adressengenerator 56, der wie anhand von Fig. 6 noch erläutert wird mit jedem Impuls des Lesetakts eine Leseadresse erzeugt und somit steuert, aus welchen Speicherzellen ein 8-Bit-Datenwort auszulesen ist, wenn der Lesetakt bestimmt, daß eines auszulesen ist.

Der Lesetakt wird in den Takteingang eines 8-Bit-Registers 57 eingegeben, so daß mit jedem Impuls des Lesetakts ein Datenwort mit den Bits D0 bis D7 an den Ausgängen des Registers 57 für die weitere Verarbeitung zur Verfügung steht. Somit hat der Adressengenerator 56 die Funktion der in Fig. 2a gezeigten Lese-Steuerung 53. Ebenso wie diese erhält er an einem Steuereingang ein Steuersignal (2 Bits parallel) von der Multiplexsteuerung 31 in Fig. 2a, das den Betrag der mit jedem Impuls des Lesetakts stattfindenden Verschiebung der Leseadressen bestimmt.

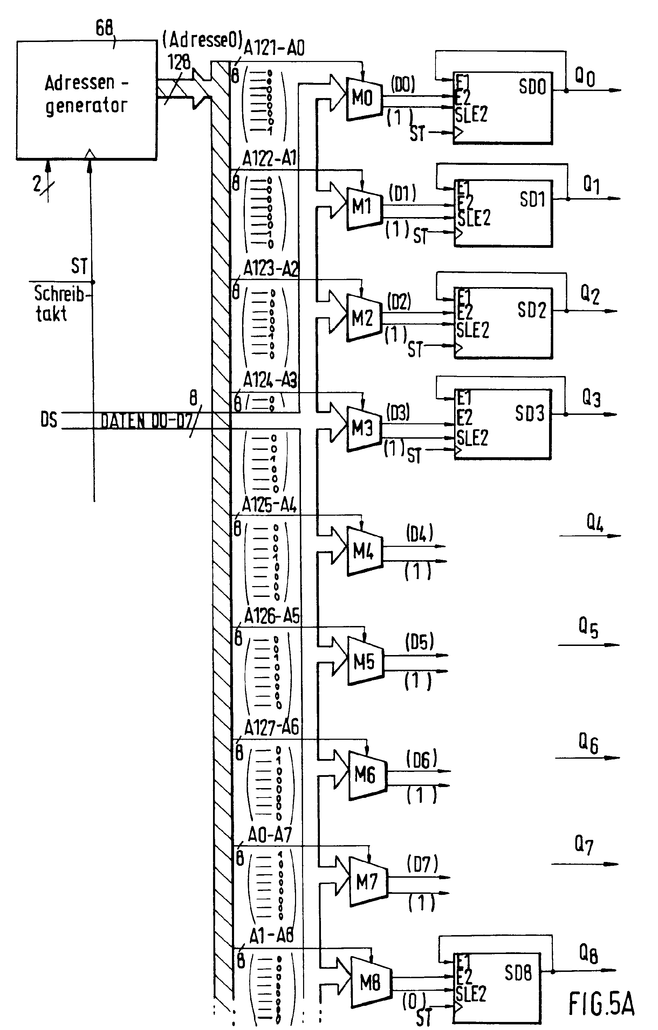

Anhand der Fig. 3a oder 3 b wurde das Einschreiben in den elastischen Speicher 64 und das Auslesen aus diesem grob erläutert. Die Fig. 5a zeigt die dort erwähnte, jedoch nicht dargestellte, Logikschaltung und den Aufbau des elastischen Speichers 64. Wie in Fig. 3a angedeutet, gelangt auch hier eine Folge DS von 8-Bit-Datenwörtern in Parallelform auf den Eingang des elastischen Speichers. Der elastische Speicher besteht aus einer parallelen Anordnung von z.B. 128 1-Bit-Speicherzellen (Flip-flops), von denen nur einige dargestellt und mit SD0, SD1 usw. bezeichnet sind. Die in Fig. 3a dargestellte Schreib-Steuerung und die dort nicht gezeigte Logikschaltung haben die Aufgabe, zu steuern, in welche 8 nebeneinanderliegende Speicherzellen (Speicherzellen mit aufeinanderfolgenden Adressen) ein von der 8-Bit-Eingangsleitung DS empfangenes Datenwort einzuschreiben ist.

Die Logikschaltung zum Einschreiben besteht aus einer parallelen Anordnung von 128 Multiplexschaltungen, von denen nur einige dargestellt und mit M0 bis M8 bezeichnet sind. Jede dieser Multiplexschaltungen gehört genau zu einer Speicherzelle, und trägt daher dieselbe Nummer wie die zugehörige Speicherzelle. Jede der Multiplexschaltungen hat 8 parallele Dateneingänge, jeweils für ein Bit des Datenworts, die mit den 8 parallelen Eingangsleitungen DS des elastischen Speichers verbunden sind, so daß jedes am Speichereingang erscheinende Datenwort mit den Bits D0 bis D7 am Eingang jeder der Multiplexschaltungen M0 bis M127 anliegt.

Jede der Multiplexschaltungen M0 bis M127 hat 8 parallele Steuereingänge und empfängt an diesen ein 8-Bit-Steuerwort, das über 8 parallele Steuerleitungen eingegeben wird. Wie noch erlautert wird, steuert dieses Steuerwort, welches der Bits D0 bis D7 des an den Dateneingängen anliegenden Datenworts an einem 1-Bit-Datenausgang ausgegeben wird. Dieser 1-Bit-Datenausgang ist in der Zeichnung der obere von zwei dargestellten Ausgängen und ist mit einem Eingang E2 des zugehörigen Speicherelements verbunden. Der andere Ausgang ist ein Ausgang für ein Steuersignal und ist mit einem Eingang SLE2 des zugehörigen Speicherelements verbunden.

Die Steuerung der Multiplexschaltungen M0 bis M127 geschieht nun wie folgt:
Ein mit dem Schreibtakt ST (auch in Fig. 3a dargestellt) getakteter Adressengenerator 68 generiert, wie anhand von Fig. 6 noch näher erläutert wird, mit jedem Impuls des Schreibtakts eine bestimmte Speicheradresse, die 128 Zustände annehmen kann, da 128 Speicherzellen vorhanden sind. Zur Darstellung einer Solchen Speicheradresse hat der Adressengenerator 128 parallele Ausgangsleitungen, die in der Zeichnung mit A0 bis A127 bezeichnet sind. Eine bestimmte Adresse wird nun einfach dadurch dargestellt, daß die ebenso numerierte Ausgangsleitung den Binärzustand 1 und alle anderen den Binärzustand 0 aufweisen, bei Adresse 0 hat also die Ausgangsleitung A0 eine Eins und alle anderen Ausgangsleitungen eine Null, bei einer Adresse von z.B. 121 hat die Ausgangsleitung A 121 eine Eins und alle anderen eine Null.

Ein Steuerwort für eine der Multiplexschaltungen M0 bis M127 wird nun dadurch gebildet, daß eine bestimmte Gruppe von 8 der 128 parallelen Ausgangsleitungen des Adressengenerators mit den Steuereingängen der Multiplexschaltung verbunden ist. Wie in der Zeichnung dargestellt, sind dies für die Multiplexschaltung M0 die 8 Leitungen A121 bis A0, d.h. A121, A122, A123, A124, A125, A126, A127, A0. Bei der Multiplexschaltung M1 sind es die Leitungen A122 bis A1, bei der Multiplexschaltung M2 sind es die Leitungen A123 bis A2. Ebenso ist die Auswahl der Leitungen für die anderen Multiplexschaltungen, die in der Zeichnung gezeigt sind, in der Zeichnung dargestellt. Für die nicht gezeigten Multiplexelemente ist die Auswahl der Leitungen durch Fortsetzung ohne weitere Erläuterung verständlich.

An einem Beispiel werden nun die dadurch bewirkte Steuerung der Multiplexschaltunge M0 bis M128 erläutert. Die für das Beispiel betrachteten Zustände der Ein- und Ausgangsleitungen sind in der Zeichnung in Klammern angegeben. Betrachtet wird der Fall, daß der Adressengenerator 68 gerade die Adresse 0 ausgibt. Wie oben erwähnt, hat in diesem Fall die Ausgangsleitung A0 den Zustand 1 und alle anderen Ausgangsleitungen A1 bis A127 den Zustand 0. Die gezeigten Leitungen sind in der durch die Numerierung gegebenen Reihenfolge an die 8 Steuereingänge einer Multiplexschaltung angelegt, so daß in dem betrachteten Beispiel die Multiplexschaltung M0 wie schematisch dargestellt, an ihrem ersten Steuereingang (von unten nach oben betrachtet) eine Eins empfängt, die Multiplexschaltung M1 an ihrem zweiten Steuereingang (an diesem liegt die Leitung A0) eine Eins empfängt, die Multiplexschaltung M3 an ihrem dritten Steuereingang eine Eins empfängt usw. und die Multiplexschaltung M8 an keinem ihrer Steuereingänge eine Eins empfängt, da an keinem ihrer Steuereingänge die Leitung A0 anliegt.

Bei diesem Zustand der Steuereingänge schaltet die Multiplexschaltung M0 das erste Bit D0 des Datenworts, die Multiplexschaltung M1 das zweite Bit D1 des Datenworts, die Multiplexschaltung M3 das dritte Bit D2 des Datenworts usw. und die Multiplexschaltung M7 das letzte Bit D7 des Datenworts auf ihren 1-Bit-Datenausgang durch. An ihrem Steuerausgang gibt jede der gezeigten Multiplexschaltungen genau dann eine Eins aus, wenn überhaupt irgendeine ihrer Steuerleitungen den Zustand 1 aufweist. Im betrachteten Beispiel sind dies nur die Multiplexschaltungen M0 bis M7, M8 und die weiteren geben an ihrem Steuereingang wie für M8 gezeigt, eine Null aus. Die Eins am Steuereingang SLE2 der Speicherzellen SD0 bis SD7 bewirkt in den Speicherzellen, daß das an den Ausgängen der Multiplexschaltungen M0 bis M7 erscheinende Datenwort D0 bis D7 in diese Speicherzellen SD0 bis SD7 übernommen wird, wenn am Takteingang ein Impuls des Schreibtakts ST erscheint. Diejenigen Speicherzellen, die an ihrem Steuereingang SLE2 ("Selekt E2") keine Eins empfangen, speichern beim Empfang eines Taktimpulses ihren Ausgangszustand in einen Dateneingang E1 ein, d.h. sie behalten ihren bisherigen Zustand bei. Dies ist im betrachteten Beispiel der Fall bei der Speicherzelle SD8 und den weiteren Speicherzellen bis SD127, für die es daher auch belanglos ist, welches der Bits D0 bis D7 eines Datenworts sie von der zugehörigen Multiplexschaltung empfangen, wenn keiner von ihren acht Steuerleitungen den Zustand 1 aufweist.

Die Ausgangsleitungen der Speicherzellen SD0 bis SD128 sind mit Q0, Q1 usw. bezeichnet. Sie sind jeweils auf einen Eingang E1 der Speicherzelle rückgeführt.

Aus der bisher gegebenen Erläuterung eines Beispiels ist ohne weiteres ersichtlich, daß die gezeigte Schaltungsanordnung die Eigenschaft hat, bei jeder beliebigen vom Adressengenerator erzeugten Speicheradresse i (i zwischen 0 und 127) ein Datenwort in die 8 Speicherzellen, die aus SDi und den 7 folgenden bestehen, einzuschreiben.

Damit ist die Schaltung auch in der Lage, wie in Fig. 3b gezeigt, bereits eingeschriebene Datenwörter beim nächsten Einschreibvorgang ganz oder teilweise zu überschreiben, in dem der Adressengenerator die Schreibadresse nicht um 8, sondern z.B. nur um 6 erhöht, so daß die beiden letzten Bits eines eingeschriebenen Worts beim Einschreiben des nächsten Worts überschrieben werden.

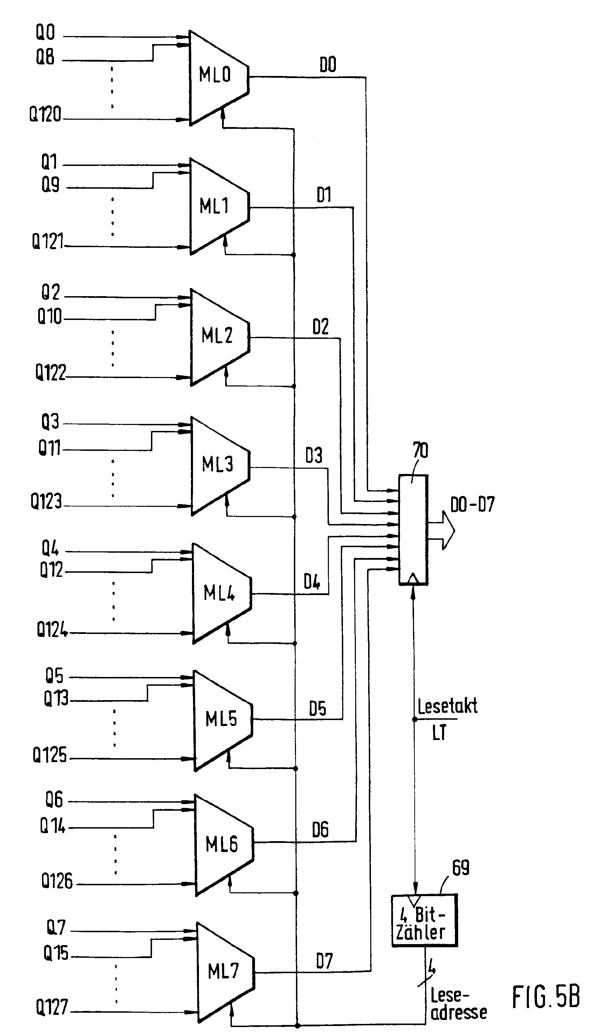

Fig. 5b zeigt nun ein Beispiel für eine Logikschaltung zum Auslesen aus dem Speicher und eine Lese-Steuerung, die dazu vorgesehen sind, den Inhalt des Speichers wie in Fig. 3b dargestellt, wortweise nacheinander auszulesen. Die Logikschaltung besteht hier aus einer parallelen Anordnung von 8 Multiplexschaltungen ML0 bis ML7. Jede der 8 Multiplexschaltungen hat 16 Dateneingänge und einen 4-Bit-Steuereingang, und alle 8 Multiplexschaltungen empfangen an ihrem 4-Bit-Steuereingang ein für alle gemeinsames 4-Bit-Steuerwort.

Die 8 mal 16 Dateneingänge der 8 Multiplexschaltungen sind wie folgt mit den 128 Speicherausgängen Q0 bis Q127 (Fig. 5a) verbunden: Die ersten Eingänge der Multiplexschaltungen ML0 bis ML7 sind mit der ersten Gruppe Q0 bis Q7 von Ausgangsleitungen des elastischen Speichers verbunden, nämlich ML0 mit Q0, ML1 mit Q1 usw. bis ML7 bis Q7, jeweils am ersten Eingang, in der Zeichnung der oberste Eingang der Multiplexschaltungen. In entsprechender weise sind die jeweils zweiten Eingänge der Multiplexschaltungen mit der zweiten Gruppe von aufeinanderfolgenden Speicherausgängen Q8 bis Q15 verbunden usw., so daß schließlich die 16. Eingänge der Multiplexschaltungen mit der letzten Gruppe Q120 bis Q127 der Ausgangsleitungen des Speichers verbunden sind.

Das an den Steuereingängen der Multiplexschaltungen ML0 bis ML7 für alle gemeinsam anliegende Steuerwort, die sogenannte Leseadresse, bestimmt ein 4-Bit-Zähler 69, der zyklisch von 0 bis 15 zählt. Die Multiplexschaltungen ML0 bis ML7 haben die Eigenschaft, daß sie beim Anliegen der Leseadresse 0 (binär 0000) jeweils ihren ersten Eingang zu ihrem Ausgang durchschalten, d.h. bei Leseadresse 0 erscheint an Ausgängen D0 bis D7 von ML0 bis ML7 das an den Speicherausgängen Q0 bis Q7 ausgegebene Wort als Datenwort. Bei der Leseadresse 1 (binär 0001) schalten die Multiplexschaltungen jeweils ihren zweiten Eingang, d.h. die an den Ausgängen Q8 bis Q15 des Speichers ausgegebenen Bits, als Datenwort auf ihre Ausgänge D0 bis D7 durch, und bei Leseadresse 15 (binär 1111) schalten sie ihre 16. Eingänge, also die Bits von den Speicherausgängen Q120 bis Q127 zu ihren Ausgängen durch.

Somit wird, wie in Fig. 3b gezeigt, der Speicher Wort für Wort parallel ausgelesen. Jedes ausgelesene Wort wird von den Ausgängen der Multiplexschaltung D0 bis D7 parallel in ein Register 70 eingegeben, jeweils mit einem Impuls des Lesetakts. Der zyklisch arbeitende 4-Bit-Zähler 69 ist also die in Fig. 3a gezeigte Lesesteuerung 66.

Zu erwähnen ist noch, daß in einer nicht gezeigten Schaltung fortlaufend die vom Adressengenerator 68 der Fig. 5a erzeugten Schreibadressen mit den vom Zähler 69 der Fig. 5b erzeugten Leseadressen miteinander verglichen und daß der im Zusammenhang mit Fig. 3a erwähnte lokale Oszillator, der den Lesetakt LT erzeugt, durch eine Phasenregelschleife so geregelt wird, daß die Leseadressen in geeignetem Abstand hinter den Schreibadressen zurückbleiben.

Anhand von Fig. 6 wird nun ein Ausführungsbeispiel des in Fig. 5a gezeigten Adressengenerators 68 erläutert. Ein 7-Bit-Addierer 80 empfängt an einem Addierer-Eingang sein Ausgangswort mit 7 Bits und an einem anderen Addierer-Eingang ein Wort mit 4 Bits, das eine Multiplex-Schaltung 81 an ihrem Datenausgang ausgibt. An seinem Takteingang liegt der Schreibtakt ST, so daß der Addierer 80 mit jedem Impuls des Schreibtakts den Wert seines Ausgangsworts um den Wert seines von der Multiplexschaltung 81 empfangenen 4-Bit-Eingangsworts erhöht. Die Multiplexschaltung 81 hat 4 Eingangsleitungen mit jeweils 4 Bits, und jede der 4-Bit-Eingangsleitungen hat dauernd einen Zustand, der die Binärdarstellung einer bestimmten Zahl bedeutet. Bei einer ersten Eingangsleitung ist dies die Zahl 8 in Binärdarstellung (8b) bei einer zweiten Eingangsleitung die Zahl 7 in Binärdarstellung (7b), bei einer dritten Eingangsleitung die Zahl 6 in Binärdarstellung (6b) und bei einer vierten Eingangsleitung die Zahl 0 in Binärdarstellung (0b). Durch 2 Bits an einem Steuereingang der Multiplexschaltung 81, die von der Demultiplexersteuerung 62 (Fig. 3a) kommen, läßt sich die Multiplexschaltung 81 so steuern, daß entweder die Zahl 0 oder die Zahl 6 oder die Zahl 7 oder die Zahl 8 jeweils in Binärdarstellung ausgegeben und in den Addierer 80 eingegeben wird, so daß der Addierer seinen Zählstand wahlweise um 0, 6, 7 oder 8 erhöht.

Am Ausgang des Addierers erscheint somit mit jedem Impuls des Schreibtakts eine Schreibadresse in 7-Bit-Binärdarstellung, die sich von der vorhergehenden entweder um 0 oder um 6 oder um 7 oder um 8 unterscheidet, so daß der Adressengenerator nach Fig. 6 die im Zusammenhang mit den vorstehenden Figuren erwähnte Eigenschaft hat, daß er mit steuerbarem Abstand aufeinanderfolgende Schreibadressen erzeugt.

Ein Codierer 82 setzt jede Schreibadresse aus dem Binärcode in einen 1-aus-128-Code um, indem er wie anhand von Fig. 5a erläutert jede der 128 Adressen durch eine logische 1 auf einer von 128 parallelen Ausgangsleitungen darstellt. Dies sind schließlich die vom Adressengenerator 68 in Fig. 5a ausgegebenen Schreibadressen.

Der Adressengenerator 56 aus Fig. 4b zur Erzeugung der Leseadressen ist im wesentlichen wie der in Fig. 6 gezeigte aufgebaut, mit dem Unterschied, daß der Codierer 82 entfällt, also die Binärdarstellung der Adressen direkt als Leseadressen verwendet werden kann, mit dem weiteren Unterschied, daß am Takteingang des Addierers statt des Schreibtakts der Lesetakt anliegt und schließlich dem Unterschied, daß die zwei Bits zur Steuerung der Multiplexschaltung 81 von der Multiplexersteuerung 31 nach Fig. 2a kommen.

## Patentansprüche

1. Multiplexer, der ein Digitalsignal und digitale Zusatzinformationen zu einem Zeitmultiplexsignal zusammensetzt,
- wobei der Pulsrahmen des Zeitmultiplexsignals wortweise aus aufeinanderfolgenden n-Bit-Wörtern strukturiert ist und an mindestens einer Wortposition (Z) ein Stopfwort enthält, das mindestens an seiner letzten Bitposition Stopfbits mit undefiniertem Zustand und ansonsten Bits des Digitalsignals enthält,
- der die im Pulsrahmen aufeinanderfolgenden n-Bit-Wörter (Wᵢ, Z, Wᵢ₊₁) wortweise zusammensetzt und
- der das gesamte Stopfwort (Z) aus Bits (8 bis 15) des Digitalsignals (D) bildet und die Bits (14, 15) des Stopfworts (Z), die Stopfbits sein sollen, am Anfang des darauffolgend gebildeten Worts (Wᵢ₊₁) wiederholt.

2. Demultiplexer, der ein aus einem Digitalsignal und digitaler Zusatzinformation und Stopfbits zusammengesetztes Zeitmultiplexsignal (D′) zerlegt,
- wobei der Pulsrahmen des Zeitmultiplexsignals wortweise aus aufeinanderfolgenden n-Bit-Wörtern (Wᵢ,Z,Wᵢ₊₁) strukturiert ist und an mindestens einer Wortposition ein Stopfwort enthält, das mindestens an seiner letzten Bitposition ein Stopfbit (S,R) und ansonsten Bits (I) des Digitalsignals enthält,
- der eine Demultiplex-Schaltung (63) hat, die das Digitalsignal wortweise gemäß der Struktur des Pulsrahmens in n-Bit-Wörter (X, POH, SOH, Au-4 PTR), die keine Bits des Digitalsignals enthalten, und n-Bit-Wörter (DS), die Bits des Digitalsignals enthalten, zerlegt,
- der einen elastischen Speicher (64) hat, in den die n-Bit-Wörter (DS), die Bits (I) des Digitalsignals (D) enthalten, einschließlich der Stopfwörter (Z), wortweise eingeschrieben werden, derart, daß Speicherzellen (14,15), die beim Einschreiben eines Stopfworts (Z) mit Stopfbits (S,R) belegt werden, beim Einschreiben des darauffolgenden Worts (Wᵢ₊₁) überschrieben werden, und
- der das Digitalsignal (D) durch Auslesen der im elastischen Speicher (64) gespeicherten Bits (I) wiedergewinnt.

3. Multiplexer nach Anspruch 1 mit den weiteren Merkmalen,
- daß er einen elastischen Speicher (50) mit einer Vielzahl von Speicherzellen (0...24...) mit aufeinanderfolgenden Adressen, einen Seriell-Parallel-Wandler (51), und eine zugehörige Schreib-Steuerung (52) enthält,
- daß der Seriell-Parallel-Wandler das Digitalsignal (D) in aufeinanderfolgende n-Bit-Wörter (Dᵢ, Dᵢ₊₁, Dᵢ₊₂) mit beliebiger Phase des Worttakts umwandelt,
- daß die Schreib-Steuerung (52) und der elastische Speicher (50) so arbeiten, daß die n-Bit-Wörter (Dᵢ,Dᵢ₊₁,Dᵢ₊₂) Wort für Wort parallel in den elastischen Speicher (50) eingeschrieben werden, derart, daß aufeinanderfolgende Bits des Digitalsignals (D) Speicherzellen mit aufeinanderfolgenden Adressen belegen,
- daß er zum elastischen Speicher (50) eine Lese-Steuerung (53) enthält, die von einer den Pulsrahmen-Aufbau steuernden Steuereinrichtung (31) des Multiplexers gesteuert wird,
- daß die Lese-Steuerung (53) das Auslesen aus dem elastischen Speicher (50) so steuert, daß die aus Bits des Digitalsignals (D) bestehenden n-Bit-Wörter (Wᵢ) des Pulsrahmens und das Stopfwort (Z) durch wortweises Auslesen von gespeicherten Bits des Digitalsignals (D) gebildet werden, und
- daß sie dabei jeweils nach dem Auslesen eines n-Bit-Wortes (Wᵢ) des Pulsrahmens, das nur Bits des Digitalsignals (D) enthalten soll, die Leseadressen um n verschiebt und jeweils nach dem Auslesen eines Stopfworts (Z) die Leseadressen nur um n-1 verschiebt, wobei l die Zahl der Stopfbits ist, die im Stopfwort (Z) enthalten sein sollen.

4. Demultiplexer nach Anspruch 2, mit den weiteren Merkmalen,
- daß der elastische Speicher (64) eine Vielzahl von Speicherzellen mit aufeinanderfolgenden Adressen (0, ..., 24, ...) hat,
- daß er eine Schreib-Steuerung (65) hat, die die Schreibadressen jeweils nach dem Einschreiben eines n-Bit-Wortes der Folge (DS) von Bits (I) des Digitalsignals (D) enthaltenden n-Bit-Wörtern (Wᵢ, Z, Wᵢ₊₁) um n, jedoch wenn das eingeschriebene Wort ein Stopfwort (Z) war, nur um n-l verschiebt, wobei l die Anzahl der in dem Stopfwort (Z) enthaltenen Stopfbits (S, R) ist, und
- daß er eine Lese-Steuerung (66) hat, die das Auslesen so steuert, daß die gespeicherten Bits entsprechend ihrer Reihenfolge im Digitalsignal (D) ausgelesen werden.

5. Demultiplexer nach Anspruch 2 oder 4, mit den weiteren Merkmalen, daß auch Wörter, die keine Bits des Digitalsignals (D) enthalten, wortweise in den elastischen Speicher (64) eingeschrieben werden, jedoch beim Einschreiben des darauffolgenden Wortes überschrieben werden.

6. Demultiplexer nach Anspruch 4 und 5, dessen Schreib-Steuerung (65) die Schreibadressen jeweils nach dem Einschreiben eines n-Bit-Wortes in den elastischen Speicher (64) um n-l verschiebt, wobei l die Anzahl der in dem n-Bit-Wort enthaltenen Bits ist, die keine Bits des Digitalsignals (D) sind.

## Claims

1. Multiplexer which combines a digital signal and digital additional information into a time-division-multiplex signal,
- with the pulse frame of the time-division-multiplex signal structured from successive n-bit words and containing in at least one word position (Z) a stuffing word which contains stuffing bits of undefined state in at least its last bit position and bits of the digital signal in the other bit positions,
- which forms the pulse frame by combining the successive n-bit words (Wᵢ, Z, Wᵢ₊₁) word by word, and
- which forms the complete stuffing word (Z) from bits (8 to 15) of the digital signal (D) and repeats those bits (14, 15) of the stuffing word (Z) which are to be stuffing bits at the beginning of the subsequently formed word (Wᵢ₊₁).

2. Demultiplexer which separates a time-division-multiplex signal (D′) composed of a digital signal, digital additional information, and stuffing bits,
- with the pulse frame of the time-division-multiplex signal structured from successive n-bit words (Wᵢ, Z, Wᵢ₊₁) and containing in at least one word position a stuffing word which contains a stuffing bit (S, R) in at least its last bit position and bits (I) of the digital signal in the other bit positions,
- which includes a demultiplexing circuit (63) which separates the digital signal word by word, in accordance with the structure of the pulse frame, into n-bit words (X, POH, SOH, Au-4 PTR), containing no bits of the digital signal and into n-bit words (DS) containing bits of the digital signal,
- which includes an elasticity buffer (64) into which the n-bit words (DS) containing bits (I) of the digital signal (D), including the stuffing words (Z), are written word by word, such that memory cells (14, 15) occupied by stuffing bits (S, R) during write-in of a stuffing word (Z) are overwritten during write-in of the next word (Wᵢ₊₁), and
- which recovers the digital signal (D) by reading out the bits (I) stored in the elasticity buffer (64).

3. Multiplexer according to Claim 1, with the further features,
- that it includes an elasticity buffer (50) having a number of memory cells (0...24...) with successive addresses, a serial-to-parallel converter (51), and an associated write controller (52),
- that the serial-to-parallel converter converts the digital signal (D) into successive n-bit words (Dᵢ, Dᵢ₊₁/ Dᵢ₊₂) of arbitrary word-clock phase,
- that the write controller (52) and the elasticity buffer (50) operate so that the n-bit words (Dᵢ, Dᵢ₊₁, Dᵢ₊₂) are written into the elasticity buffer (50) word by word and in parallel, such that successive bits of the digital signal (D) occupy memory cells with successive addresses,
- that the elasticity buffer (50) has an associated read controller (53) which is controlled by a multiplex controller (31) controlling the formation of the pulse frame,
- that the read controller (53) controls the readout from the elasticity buffer (50) in such a way that the n-bit words (Wᵢ) of the pulse frame, which consist of bits of the digital signal (D), and the stuffing word (Z) are formed by reading out stored bits of the digital signal (D) word by word, and
- that the read controller (53) shifts the read addresses by n and after readout of each n-bit word (Wᵢ) of the pulse frame which is to contain only bits of the digital signal (D), and shifts the read addresses by only n-1 after readout of each stuffing word (Z), where 1 is the number of stuffing bits to be contained in the stuffing word (Z).

4. Demultiplexer according to Claim 2, with the further features,
- that the elasticity buffer (64) has a number of memory cells with successive addresses (0,...24,...),
- that it includes a write controller (65) which shifts the write addresses by n after write-in of each n-bit word of the sequence (DS) of n-bits words (Wᵢ, Z, Wᵢ₊₁) containing bits (I) of the digital signal (D), and by only n-1 if the written word was a stuffing word (Z), where 1 is the number of stuffing bits (S, R) contained in the stuffing word (Z), and
- that it includes a read controller (66) which controls the readout so that the stored bits are read according to their order in the digital signal (D).

5. Demultiplexer according to Claim 2 or 4, with the further features that words containing no bits of the digital signal (D) are also written word by word into the elasticity buffer (64) but are overwritten during write-in of the following word.

6. Demultiplexer according to Claim 4 and 5, whose write controller (65) shifts the write addresses by n-1 after write-in of each n-bit word into the elasticity buffer (64), where 1 is the number of bits contained in the n-bit word, which are no bits of the digital signal (D).

## Revendications

1. Multiplexeur, qui assemble un signal numérique et des informations numériques supplémentaires pour donner un signal multiplexé par répartition dans le temps,
- dans lequel la trame d'impulsions du signal multiplexé par répartition dans le temps est structurée, à l'échelle du mot, en mots de n bits qui se suivent et contient, à au moins une position de mots (Z), un mot de remplissage qui, à au moins sa dernière position de bit, contient des bits de remplissage à état indéfini et, par ailleurs, des bits du signal numérique,
- qui assemble à l'échelle du mot les mots de n bits (Wᵢ, Z, Wᵢ₊₁ qui se suivent dans la trame d'impulsions et
- qui forme la totalité du mot de remplissage (Z) de bits (8 à 15) du signal numérique (D) et répète, au début du mot formé suivant (Wᵢ₊₁), les bits (14, 15) du mot de remplissage (Z) qui doit former les bits de remplissage.

2. Démultiplexeur qui décompose un signal multiplexé par répartition dans le temps (D) composé d'un signal numérique et d'information numérique supplémentaire et de bits de remplissage.
- dans lequel la trame d'impulsions du signal multiplexé par répartition dans le temps est structurée, à l'échelle du mot, en mots de n bits (Wᵢ,Z,Wᵢ₊₁) qui se suivent et, à au moins une position de mot, contient un mot de remplissage qui, au moins à sa dernière position de bit, contient un bit de remplissage (S,R) et, par ailleurs, des bits (I) du signal numérique,
- qui comporte un circuit de démultiplexage qui décompose le signal numérique. à l'échelle du mot, selon la structure de la trame d'impulsion, en mots de n bits (X, POH, SOH, Au-4 PTR), qui ne contiennent aucun bit du signal numérique, et en mots de n bits (DS), qui contiennent des bits du signal numérique,
- qui comporte une mémoire élastique (64) dans laquelle les mots de n bits (DS), qui contiennent des bits (I) du signal numérique (D), y compris les mots de remplissage (Z), s'inscrivent à l'échelle du mot, de façon que des cellules de mémoire (14, 15), qui, lors de l'inscription d'un mot de remplissage (Z), sont occupées par des bits de remplissage (S,R), soient, lors d'une inscription du mot suivant (Wᵢ₊₁), l'objet d'une inscription en surcharge, et
- qui récupère le signal numérique (D) par lecture des bits (I) mémorisés dans la mémoire élastique (64).

3. Multiplexeur selon la revendication 1, présentant les autres caractéristiques selon lesquelles
- il contient une mémoire élastique (50) présentant une pluralité de cellules de mémoire (0...24...) avec des adresses qui se suivent, un transducteur série-parallèle (51), et une commande d'écriture (52) correspondante,
- le transducteur-série-parallèle convertit le signal numérique (D) en mots de n bits (Dᵢ, Dᵢ₊₁, Dᵢ₊₂) qui se suivent avec une phase quelconque de la fréquence des mots,
- la commande d'écriture (52) et la mémoire élastique (50) travaillent de façon que les mots de n bits (Dᵢ,Dᵢ₊₁,Dᵢ₊₂) s'inscrivent mot pour mot, en parallèle, dans la mémoire élastique (50), de façon que des bits successifs du signal numérique (D) occupent des cellules de mémoire à adresses successives,
- il contient un circuit de commande (53) de lecture en mémoire élastique (50) qui est commandé par un dispositif de commande (31) du multiplexeur qui commande la constitution de la trame d'impulsions,
- le circuit de commande de lecture (53) commande la lecture en mémoire élastique (50) de façon que les mots de n bits (Wᵢ), constitués de bits du signal numérique (D), de la trame d'impulsions et le mot de remplissage (Z) soient formés, par lecture à l'échelle du mot, de bits mémorisés du signal numérique (D), et
- après chacune des lectures d'un mot de n bits (Wᵢ) de la trame d'impulsions, qui ne doit contenir que des bits du signal numérique ((D), il y décale les adresses de lecture de n et après chacune des lectures d'un mot de remplissage (Z), il n'y décale les adresses de lecture que de n-ℓ, ℓ étant le nombre des bits de remplissage qui doivent être contenus dans le mot de remplissage (Z).

4. Démultiplexeur selon la revendication 2, présentant les autres caractéristiques selon lesquelles,
- la mémoire élastique (64) présente une pluralité de cellules de mémoire à adresses successives (0,.... 24, ...),
- il contient un circuit de commande d'écriture (65) qui, après chacune des inscriptions d'un mot de n bits de la suite (DS) de bits (I) du signal numérique (D) contenant des mots de n bits (Wᵢ, Z, Wᵢ₊₁), décale les adresses d'écriture de n, mais, si le mot inscrit était un mot de remplissage (D), ne les décale que de n-ℓ, ℓ étant le nombre des bits de remplissage (S, R) contenus dans le mot de remplissage (Z), et
- il contient un circuit de commande de lecture (66) qui commande la lecture de façon que les bits mémorisés soient lus en fonction de leur succession dans le signal numérique (D).

5. Démultiplexeur selon la revendication 2 ou 4, présentant les autres caractéristiques selon lesquelles des mots, qui ne contiennent aucun bit du signal numérique (D), sont inscrits, à l'échelle du mot, dans la mémoire élastique (64), mais, lors de l'inscription du mot suivant, font l'objet d'un inscription en surcharge.

6. Démultiplexeur selon les revendications 4 et 5, dont, après chacune des inscriptions d'un mot de n bits dans la mémoire élastique (64), la commande d'écriture (65), décale les adresses d'inscription de n-ℓ, ℓ étant le nombre des bits contenus dans le mot de n bits qui ne sont des bits du signal numérique (D).
